# EUROPEAN PATENT SPECIFICATION

(11) **EP 3 622 825 B1**
(45) Date of publication and mention of the grant of the patent: **05.07.2023**
(21) Application number: 18798655.9
(22) Date of filing: 05.04.2018
(51) Int. Cl.: A23K 10/12, A23K 10/30, A23K 10/37, A23K 50/10

(54) **METHOD FOR PRODUCING FEED FROM SECONDARY RESOURCES FROM THE RICE PROCESSING INDUSTRY**
VERFAHREN ZUR ERZEUGUNG VON FUTTER AUS SEKUNDÄREN RESSOURCEN AUS DER REISVERARBEITUNGSINDUSTRIE
PROCÉDÉ DE PRODUCTION DE NOURRITURE POUR ANIMAUX ET DE RESSOURCES SECONDAIRES DANS L'INDUSTRIE DE TRANSFORMATION DU RIZ

(30) Priority: 11.05.2017 UZ 1700176
(43) Date of publication of application: 18.03.2020
(73) Proprietor: Sultanxodjaev, Amanulla Asadullaevich, Tashkent 100179 (UZ); Dadakhodjaev, Abror, Tashkent 100174 (UZ)
(72) Inventor: Sultanxodjaev, Amanulla Asadullaevich, Tashkent 100179 (UZ); Dadakhodjaev, Abror, Tashkent 100174 (UZ)
(74) Representative: De Gregori, Antonella
(86) International application number: PCT/UZ2018/000001
(87) International publication number: WO 2018/209364

(56) References cited:
- WO-A1-2015/197623
- WO-A2-2004/103086
- RU-C2- 2 399 295
- SU-A1- 704 588
- SU-A1- 704 588

## Description

The present invention relates to an agricultural sector and, more particularly, to a method for producing feed from raw materials which are not feed, i. e. from the waste products of rice processing industry.

The method of production of a feed of vegetable origin by processing with a biofermentation mass («Trichoderma lignorum 19») is well-known by the patent SU 704588 («Method of feed manufacture», issued to in the name of the Institute of Microbiology of the AS of the UzSSR, published in the Bulletin 47 on 25.12.79). This method has the problems of low economic use and inadequate nutrition for cattle. Also proposed is a method of utilizing waste from the rice processing industry for feed production, which is simply related to the method of adding to feed.

WO 2004/103086 discloses a method for improving the nutritional quality of a fibrous by-product or residue of a food manufacturing process, comprising: inoculating the fibrous by-product or residue, such as rice husks, with at least one filamentous fungus, such as Trichoderma; and fermenting the fibrous by-product or residue; whereby a dry matter content of the by-product or residue decreases, a protein content of the by-product or residue increases, and a fat content of the by-product or residue decreases.

Rice is one of the most valuable foods in the world. In most cases, these wastes will be incinerated because of the large quantity of rice husks being able to be produced as waste during processing of rice grains and the fact that the rice hulls contain silica. Further, a large amount of land is required to fill an incineration product. Thus, the problem of disposal of waste from the rice processing industry is an important technical problem. This treatment of rice hulls has become an important problem even in Uzbekistan in which rice is cultivated and processed.

The purpose of the present invention is to expand feed production raw-material base available for animal husbandry,i. e. cattle, and to use a raw material from the rice processing industry, which has not yet been used for that purpose to date, in the production of nutritional feeds, and to provide new components in the production of cattle feed formulations.

The above problems are solved by a method for producing feed from waste from the rice processing industry, including grinding of plant-derived raw material and treatment with a biofermentation mass of Trichoderma lignorum ("Trichoderma lignorum19") wherein the main plant raw material used is rice hulls and rice flour, which is ground to 0.2-0.5 mm and then hydrothermally treated at a temperature of 110-120°C to a moisture content of 50-60% at a pressure of 1-2 atm for 1.5-2 hours, whereupon a biofermentation mass of Trichoderma lignorum 19 is added to the plant raw material in an amount of 5-15% of the mass of the raw material undergoing processing, the mixture is directed to a sealed bin for implementation of a microbiological process of impregnation and build-up of protein mass for 24-48 hours, then the resulting biomass is dried at a temperature of 50-60°C to 13-14.5% moisture content to produce a finished product. Further, it is batch packed for further application as finished product.

We have found that the quantitative protein content of the product is close to wheat, and can be used to produce various types of blended feed as an alternative component of wheat flour. Since cattle have a dual chamber stomach, this feed can be completely digested and the energy required for the growth of 30% of cattle on average can be obtained from this feed.

The finished product can be used as feed in an amount up to 30% of the daily feed of cattle. It can then be used as a new component for the production of the most appropriate and cost-effective cattle formula feed from the point of view of this product nutrient value.

Advantage of this method is the following: this invention allows disposal of secondary raw materials, produced by the rice processing industry, as well as to receive a feed for farm animals, namely for bovine cattle, as a major feed for cattle, which has greater nutrient value due to the large amount of digestible proteins.

The method of the present invention can be carried out as follows.

### Example 1

For a feed production of 1000 kg, rice hulls (optionally with addition of rice flour) in the quantity of 950 kg is crushed in the crusher into a powder with a grain size of 0.2-0.5 mm. The resulting mixture is hydrothermally treated using a steam boiler in a mixer at a temperature of from 110 to 120°C and a pressure of from 1 to 2 atm to a moisture of from 50 to 60% for 1.5 to 2 hours. Then, the biofermentation mass («Trichoderma lignorum 19») in the quantity of 50 kg is added. If desired, grape and apple pomace and wastes from sugar production are added. Further, they are then mixed together and placed in a sealed chamber , where, in the process of relaxation within 24-48 hours, the microbiological process of saturation and accumulation of protein mass is carried out. Then, the resulting biomass is dried at the temperature of 50-60°C till the moisture contents is 13-14.5 %, and batch packed into bags.

A utility effect of using the present invention is in disposal of secondary raw materials, produced by the rice processing industry and to obtain livestock feed. As a result, rice hulls, which are valuable renewable plant-derived resources, can be more fully and rationally utilized.

## Claims

1. A method for producing feeds, which involves grinding a plant raw material and subjecting the same to biofermentation treatment using an active culture of Trichoderma lignorum, wherein the main plant raw material used is rice hulls and rice flour, which is ground to 0.2-0.5 mm and then hydrothermally treated at a temperature of 110-120°C to a moisture content of 50-60% at a pressure of 1-2 atm for 1.5-2 hours, whereupon a biofermentation mass of Trichoderma lignorum 19 is added to the plant matter in an amount of 5-15% of the mass of the raw material undergoing processing, the mixture is directed to a sealed bin for implementation of a microbiological process of impregnation and build-up of protein mass for 24-48 hours, then the resulting biomass is dried at a temperature of 50-60°C to 13-14.5% moisture content to produce a finished product.

2. The method for producing feed as claimed in claim 1, wherein the grape pomace, apple pomace and wastes of the sugar manufacture are added in the mix.

## Patentansprüche

1. Verfahren zur Herstellung von Futtermitteln, welches das Mahlen eines Pflanzenrohstoff und das Unterwerfen desselben einer Biofermentationsbehandlung unter Verwendung einer aktiven Kultur von Trichoderma lignorum umfasst, wobei der verwendete Hauptpflanzenrohstoff Reisschalen und Reismehl sind, welcher auf 0,2-0,5 mm gemahlen und dann bei einer Temperatur von 110-120°C auf einen Feuchtigkeitsgehalt von 50-60% bei einem Druck von 1-2 atm für 1,5-2 Stunden hydrothermal behandelt wird, woraufhin eine Biofermentationsmasse von Trichoderma lignorum 19 zu dem Pflanzenmaterial in einer Menge von 5-15% der Masse des Rohstoffs, welcher der Verarbeitung unterzogen wird, zugegeben wird, die Mischung in einen verschlossenen Behälter zur Implementierung eines mikrobiologischen Verfahrens der Imprägnierung und des Aufbaus von Proteinmasse für 24-48 Stunden geleitet wird, dann die resultierende Biomasse bei einer Temperatur von 50-60°C auf 13-14,5% Feuchtigkeitsgehalt getrocknet wird, um ein Endprodukt herzustellen.

2. Verfahren zur Herstellung von Futter nach Anspruch 1, wobei der Traubentrester, der Apfeltrester und die Abfälle der Zuckerherstellung der Mischung zugegeben werden.

## Revendications

1. Procédé de production de nourriture pour animaux consistant à broyer une matière première végétale et à la soumettre à un traitement de biofermentation à l'aide d'une culture active de Trichoderma lignorum, dans lequel la principale matière première végétale utilisée est la balle de riz et la farine de riz, qui est broyée à 0,2-0,5 mm puis soumise à un traitement hydrothermique à une température de 110 à 120 °C jusqu'à une teneur en humidité de 50 à 60 % à une pression de 1 à 2 atm pendant 1,5 à 2h ensuite, une masse de biofermentation de Trichoderma lignorum 19 est ajoutée à la matière végétale dans une proportion de 5 à 15 % de la masse de la matière première en cours de traitement, le mélange est dirigé vers un bac scellé pour la mise en oeuvre d'un processus microbiologique d'imprégnation et d'accumulation de la masse protéique pendant 24 à 48h, puis la biomasse résultante est séchée à une température de 50 à 60 °C à une teneur en humidité de 13 à 14,5 % pour produire un produit fini.

2. Procédé de production de nourriture pour animaux selon la revendication 1, dans lequel le marc de raisin, le marc de pomme et les déchets de la fabrication du sucre sont ajoutés au mélange.
